# EUROPÄISCHE PATENTSCHRIFT

(11) **EP 0 409 120 B1**
(45) Veröffentlichungstag und Bekanntmachung des Hinweises auf die Patenterteilung: **18.10.1995**
(21) Anmeldenummer: 90113531.9
(22) Anmeldetag: 14.07.1990
(51) Int. Cl.: B60C 9/00, B60C 9/18, C08J 5/06

(54) **Kautschuk-Verbundstoffe, insbesondere Fahrzeugreifen, mit dreidimensionaler Verstärkungsstruktur**
Rubber composite material having a threedimensional reinforcing structure, and use in tyres
Matériau composite en caoutchouc ayant une structure de renfort tridimensionnelle et application aux pneumatiques

(30) Priorität: 21.07.1989 DE 3924178
(43) Veröffentlichungstag der Anmeldung: 23.01.1991
(73) Patentinhaber: HOECHST AKTIENGESELLSCHAFT, 65926 Frankfurt am Main (DE)
(72) Erfinder: Disselbeck, Dieter, D-6232 Bad Soden (DE)

(56) Entgegenhaltungen:
- EP-A- 0 107 125
- EP-A- 0 250 005
- AT-B- 324 860
- FR-A- 2 184 594
- US-A- 4 486 375

## Beschreibung

Die vorliegende Erfindung betrifft hochbelastbare Kautschuk-Verbundstoffe insbesondere Fahrzeugreifen, mit dreidimensionaler Verstärkungsstruktur, die speziell ausgerüstete oder geformte Verstärkungsstruktur, sowie ein Verfahren zu deren Herstellung.

Der Gegenstand der Erfindung soll im Folgenden detailliert am Beispiel der Fahrzeugreifen erläutert werden. Die hierbei offenbarten Merkmale treffen in analoger Weise auch für die sonstigen, von der Erfindung umfaßten Kautschuk-Verbundstoffe, wie z.B. hochbelastete Keilriemen, Gummi-Transportbänder und dgl., zu. Ein grundsätzliches Problem beim Bau von Fahrzeugreifen besteht darin, die verschiedenen Anforderungen an die Laufflächeneigenschaften gleichzeitig in optimaler Weise zu erfüllen. Hierbei geht es vor allem darum, einen hohen Naßrutschwiderstand mit einem geringen Rollwiderstand und einer hohen Lebensdauer unter hoher Belastung zu verbinden. Eines der zentralen Probleme im Reifenbau wie auch bei der Herstellung anderer hochbelastbarer Kautschuk-Verbundstoffe besteht darin, der Delaminierungsneigung zu begegnen.

Fahrzeugreifen, wie auch andere Kautschuk-Verbundstoffe bestehen aus Kautschuk und Festigkeitsträgern, die üblicherweise in Form von zweidimensionalen Geweben aus Stahldraht und/oder Textilcord in mehreren Schichten in den Kautschuk eingebettet sind. Ein Nachteil dieser schichtweisen Anordnung der Gewebelagen ist die mangelnde Isotropie mit einer vergleichsweise geringen Festigkeit zwischen den einzelnen Gewebelagen. Wahrend in Längs- und Querrichtung der Gewebelagen optimale Festigkeit erreicht wird, fehlt senkrecht dazu jedoch eine Faserverstärkung, so daß die Festigkeit zwischen den Festigkeitsträgern nur durch die Haftung der Kautschukvulkanisate auf dem Stahldraht bzw. dem Textilcord zustandekommt. Dadurch besteht die Gefahr, daß sich die Gewebeschichten bei hoher Belastung, insbesondere bei walkender Beanspruchung des Kautschuk-verbundstoffs, insbesodere des Fahrzeugreifens, oder bei mechanischer Schädigung, voneinander trennen und der Kautschuk-Verbundstoff, insbesondere der Fahrzeugreifen, zerstört wird.

Eine Aufgabe der vorliegenden Erfindung besteht nun darin, hochbelastbare Kautschuk-Verbundstoffe insbesondere hochbelastbare Fahrzeugreifen mit verbesserten Eigenschaften und höherer Sicherheit zur Verfügung zu stellen.

Erfindungsgemäß wird diese Aufgabe durch Kautschuk-Verbundstoffe, insbesondere Fahrzeugreifen mit einer textilen Verstärkungsstruktur gelöst, die sich dadurch auszeichnen, daß die Verstärkungsstruktur aus einem ein maschenoffenes Netzwerk bildenden, dreidimensional geformten Netzwerkstoff besteht, der die Kautschukmasse räumlich skelettartig durchsetzt.

Die Adjektive "geformt" und "verformt" im Sinne dieser Erfindung beschreiben die dreidimensionale geometrische Form des Netzwerkstoffs. Sie bedeuten nicht, daß das Material durch einen speziellen Formungs- oder Verformungsprozeß aus einer ursprünglich anderen geometrischen Form hergestellt worden sein muß.

Ein Netzwerkstoff, der von seiner Geometrie her jedoch dem in den erfindungsgemäßen Kautschuk-Verbundstoffen enthaltenen Netzwerkstoff entspricht, ist aus der EPA 158 234 bekannt. Sein wesentliches Merkmal ist ein räumliches Netzwerk mit Stäbchen, Knotenpunkten und Hohlräumen, so daß er für andere Stoffe, wie z. B. die Kautschukmasse eines Fahrzeugreifens durchdringbar ist.

Die offenen Maschen der filigranartigen Netzstruktur des Netzwerkstoffs sind ein charakteristisches geometrisches Merkmal dieses Materials. Sie werden beispielsweise von den durch Tiefziehen gedehnten Maschen eines flächenförmigen Textilmaterials, wie z.B. eines durch dehnbare Schußfäden fixierten Kreuzgeleges, einer Raschelware oder eines Gewebes, insbesondere aber einer Maschenware gebildet. Wird als flächenförmiges Basismaterial für den Netzwerkstoff ein Kreuzgelege, in dem die Filamentbündel sich etwa in Winkeln von 5 bis 30° kreuzen, oder ein Gewebe eingesetzt, so ist es erforderlich, daß das flächenförmige Textilmaterial aus Fasern besteht, oder zumindest solche in einem wirksamen Anteil enthält, die selbst eine relativ hohe Dehnfähigkeit aufweisen, die reversibel oder nichtreversibel sein kann, damit die ausreichende Tiefziehfähigkeit des Materials gegeben ist. Ein Fasermaterial mit hoher nichtreversibler Dehnfähigkeit besteht z.B. aus teilorientierten Filamenten, welche durch Ausspinnen mit rel. hoher Spinnabzugsgeschwindigkeit hergestellt werden. Weitgehend unabhängig von der Dehnfähigkeit des Fasermaterials dagegen ist die Tiefziehfähigkeit von Maschenware. Es ist daher bevorzugt, als Basis für die Herstellung der in den Reifen enthaltenen Netzwerkstoffe eine Maschenware einzusetzen. Das Fasermaterial der flächenförmigen Textilmaterialien ist im Prinzip von untergeordneter Bedeutung. Man wird es jedoch so auswählen, daß es dem vorgesehenen Einsatzzweck in optimaler Weise zu genügen verspricht. Vom Gesichtspunkt der Haftung zwischen den Fäden des Netzwerkstoffs und dem Kautschuk her gesehen ist es vorteilhaft, den Netzwerkstoff aus Naturfasergarnen, wie z. B. Zellulosegarn, herzustellen. Sofern, wie z. B. bei weniger belasteten Reifen, die höchste Festigkeit des Netzwerkstoffs nicht gefordert wird, ist es daher vorteilhaft, Netzwerkstoff aus beispielsweise Zellulosespinnfasern einzusetzen. Während aber die physikalischen Eigenschaften von Naturfasern nur im begrenzten Rahmen zu beeinflussen sind, können die physikalischen Eigenschaften von Synthesefasern optimal dem gewünschten Einsatzzweck angepaßt werden. Es ist daher besonders bevorzugt, zur Herstellung der in den Reifen enthaltenen Netzwerkstoffe von Synthesefasermaterialien, wie z.B. Polyamiden, Aramiden, Polyacrylnitril, Polyolefinfasern, insbesondere aber von Polyestermaterialien auszugehen. Besonders bevorzugt sind hier wiederum solche Typen, die eine besonders hohe mechanische Festigkeit aufweisen. Ein Beispiele für derartige Fasermaterialien sind das Handelsprodukt ^{(R)}TREVIRA hochfest oder auch endgruppenverschlossene Polyestermaterialien, die besonders widerstandsfähig sind gegen chemische Einflüsse. Von besonderem Vorteil ist auch der Einsatz von solchen Polyestertypen, die besonders gummifreundlich sind, wie z. B. die handelsübliche Polyestertype ^{(R)}TREVIRA 715 der Hoechst AG. Die dreidimensional geformten Netzwerkstoffe sind vorzugsweise, und insbesondere wenn sie aus einem Fasermaterial mit reversibler Dehnbarkeit bestehen, durch eine Harzimprägnierung des Textilmaterials mit einem thermoplastischen oder duroplastischen Harz formstabilisiert.
Bei Einsatz eines relativ niedrig erweichenden, teilorientierten Fasermaterials kann auf eine gesonderte Harzimprägnierung verzichtet werden, weil das thermoplastische Filamentmaterial selbst die Funktion eines thermoplastischen Harzes übernimmt. Demgemäß ist unter Formstabilisierung durch einen Thermoplasten im Sinne dieser Erfindung auch die Formstabilisierung zu verstehen, die durch das Erweichen der thermoplastischen Filamente des verformten flächenförmigen Textilmaterials erfolgt.

Bei Einsatz eines irreversibel verformbaren Fasermaterials zur Herstellung des Netzwerkstoffs durch Tiefziehen oder bei der Herstellung des Netzwerkstoffs durch andere Formgebungsverfahren als Tiefziehen, z.B. durch spezielle Webverfahren, kann eine Beharzung mit einem thermoplastischen oder duroplastischen Harz ebenfalls unterbleiben, wenn die natürlicher Stabilität der Netzwerkstruktur ihre Einlagerung in die Kautschukmasse gestattet.

Die in den Netzwerkstoffen ggf. enthaltenen formstabilisierenden Harze können den verschiedenen bekannten thermoplastischen oder duroplastischen Harzgruppen entstammen, sofern ihre mechanischen Eigenschaften die Formstabilisierung der erfindungsgemäßen Netzwerkstoffe zulassen. Beispiele für geeignete thermoplastische Harze sind Polyacrylate oder Polyvinylchlorid; bevorzugte Harze sind jedoch Duroplaste, wie z.B. Melamin- und insbesondere Phenolharze.

Die in den dreidimensional verformten Netzwerkstoffen enthaltene Harzmenge ist auf das Gewicht des Textilmaterials so abgestimmt, daß sich beim Tiefziehen des flächenförmigen Textilmaterials die Maschen zu einem filigranen Netzwerk öffnen. Geeignete Auflagenmengen liegen im Bereich von 50 bis 500, vorzugsweise 100 bis 300 g Harz/m² des unverstreckten Textilmaterials. Innerhalb dieser angegebenen Bereiche wird die Harzmenge noch zweckmäßig an das Quadratmetergewicht des tiefziehfähigen Textilmaterials angepaßt. So wird man bei Einsatz eines schweren Textilmaterials innerhalb der oberen Hälfte der angegebenen Bereiche arbeiten, bei leichten Textilmaterialien in der unteren Hälfte. Das ausschlaggebende Kriterium ist, wie oben angegeben, die Bedingung, daß sich beim Tiefziehvorgang die Maschen des Textilmaterials zu einem Netzwerk öffnen.

Der erfindungsgemäße dreidimensional verformte Netzwerkstoff weist eine Vielzahl von Verformungen auf, die sich wenigstens in eine Richtung erstrecken, die eine Komponente senkrecht zur ursprünglichen Ebene des textilen Flächengebildes aufweist, aus dem der erfindungsgemäße Netzwerkstoff hergestellt wurde.

In einer besonders im Hinblick auf die weitere Verwendung als Skelettmaterial für die Herstellung des Kautschuk-Verbundstoffs spezifizierten Ausführungsform, weist der erfindungsgemäße Netzwerkstoff auf einer Basisfläche in regelmäßiger Anordnung eine Vielzahl von Erhebungen auf. In einer weiteren Ausführungsform weist der erfindungsgemäße Netzwerkstoff auf der Ebene der ursprünglichen Basisfläche in regelmäßiger Anordnung eine Vielzahl von Erhebungen und Vertiefungen auf. Die Erhebungen und Vertiefungen können die Form von Näpfchen mit runder oder eckiger Basisfläche oder z.B. die Form von Stegen haben. Die Erhebungen und Vertiefungen können aber je nach Einzelfall auch andere Formen haben, zum Beispiel die Form von Kegeln oder Kegelstümpfen, Pyramiden oder Pyramidenstümpfen mit unterschiedlich vieleckiger Basis, Zylinder, Prismen, sphärische Segmente usw. Besonders bevorzugt ist es auch, wenn die Scheitelpunkte bzw. -flächen der Erhebungen alle in einer Ebene und parallel zur Basisfläche liegen, was sinngemäß genauso für die Vertiefungen gilt.

Weiterhin ist es von Vorteil, wenn Zahl, Größe, Form und räumliche Anordnung der Verformungen pro Flächeneinheit des Flächengebildes so ausgewählt werden, daß das rechnerische Produkt aus der Größe der nach der Verformung verbliebenen Fläche der ursprünglichen Ebene und der Größe dem Flächen der Erhebungen oder das Produkt aus der Größe der Plateauflächen der Erhebungen und der Bodenflächen der Vertiefungen möglichst groß wird.

Weiter ist es von Vorteil, wenn Zahl, Größe, Form und räumliche Anordnung der Verformungen pro Flächeneinheit des Flächengebildes so ausgewählt werden, daß sie für die unterschiedliche Porosität oder sonstige Konsistenz der im Einzelfall zu Verwendung gelangenden Kautschukmasse eine optimale Massehaftung bieten.

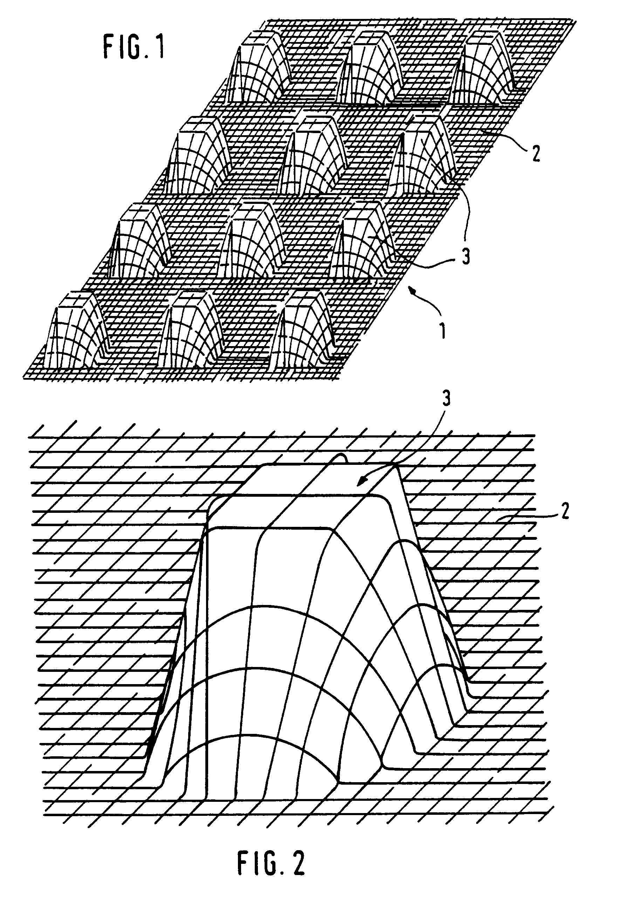

Die Figur 1 veranschaulicht schematisch einen Abschnitt einer möglichen Ausführungsform des in den erfindungsgemäßen Reifen enthaltenen Netzwerkstoffs (1), der auf einer Basisfläche (2) eine Vielzahl von hütchenförmigen Erhebungen (3) aufweist. Die Figur 2 zeigt in Vergrößerung die schematische Darstellung einer der hütchenförmigen Verformungen und veranschaulicht deutlich die im Bereich der Verformung auftretende drastische Erweiterung der Maschenstruktur des Textilmaterials.

Der erfindungsgemäß einzusetzende Netzwerkstoff kann selbstverständlich auch andere dreidimensionale Verformungen aufweisen. Es ist auch durchaus möglich, daß in dem erfindungsgemäßen dreidimensional verformten Netzwerkstoff die Fläche des ursprünglichen Textilmaterials überhaupt nicht mehr erhalten bleibt, wenn beispielsweise das Tiefziehen des Materials durch Stempel von beiden Seiten der Textilfläche her erfolgt, so daß in dem Material näpfchen- bzw. hütchenförmige Ausformungen abwechselnd nach oben und nach unten auftreten oder wenn die ursprüngliche Textilfläche durch eine Vielzahl schmaler, sich in der gleichen Längsrichtung erstreckenden Stempel von beiden Seiten zu einer Zickzackfläche ausgezogen und in dieser Form stabilisiert wird.

Das obengenannte Verfahren zur Herstellung des in den erfindungsgemäßen Reifen enthaltenen Netzwerkstoffs durch Tiefziehen eines tiefziehfähigen, flächenförmigen Textilmaterials stellt eine besonders vorteilhafte Möglichkeit zur Ausführung der vorliegenden Erfindung dar und charakterisiert durch sein Verfahrensergebnis die wesentlichen Merkmale des Netzwerkstoffs.

Zur Herstellung des Netzwerkstoffs können aber selbstverständlich auch andere Formgebungsverfahren, wie z.B. spezielle Webverfahren eingesetzt werden, die geeignet sind, ein ggf. harzstabilisiertes Textilmaterial herzustellen, das, wie oben beschrieben, räumlich verformt ist und das die charakteristische offenmaschige Netzstruktur des durch Tiefziehen herstellbaren Netzwerkstoffs aufweist.

Die oben beschriebene Netzstruktur liegt zunächst in flächenförmiger Ausdehnung vor, d. h. sie erfüllt mit ihrer gesamten geometrischen Gestalt ein ebenes flächenförmiges Raumelement von der Dicke der geometrischen Ausformungen. Zum Einbau dieses Netzwerkstoffs in einen Fahrzeugreifen kann aus der ebenen Struktur ein der Reifenbreite und dem Reifenumfang angepaßter Abschnitt erzeugt werden. Dieser kann aufgrund der hohen Flexibilität des Netzwerkstoffs in den Aufbau von Karkasse und Gürtel des erfindungsgemäßen Reifens einbezogen werden. An der Stoßstelle zwischen Anfang und Ende des um den Reifenaufbau gelegten Netzwerkstoffstreifens wird zweckmäßigerweise für eine haltbare Verbindung gesorgt. Diese Verbindung kann beispielsweise durch Verschweißen, Verkleben, Vernähen oder ähnlichen Maßnahmen erfolgen.

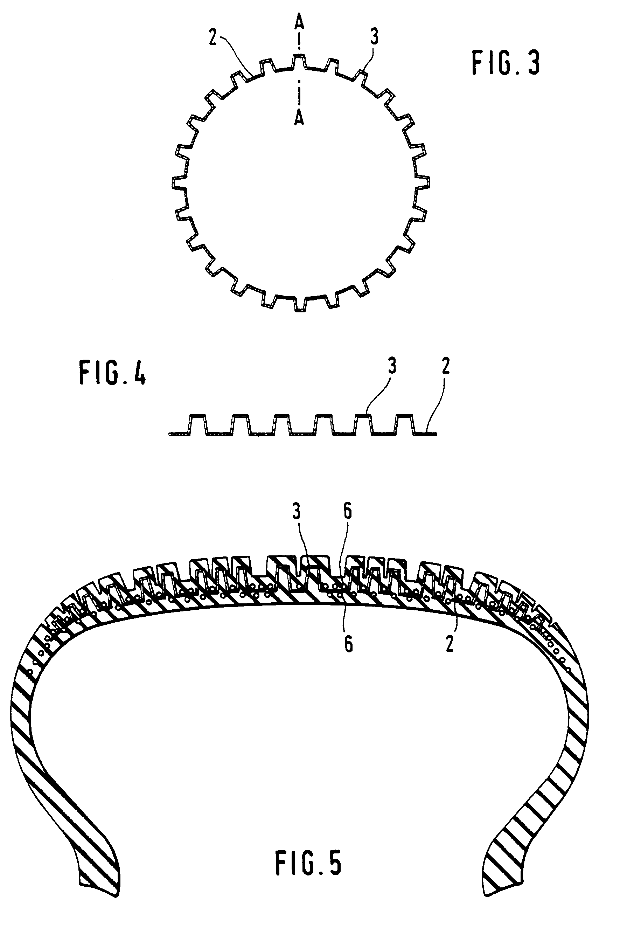

Alle Komplikationen, die im Zusammenhang mit der Stoßstelle der Netzwerkstoffeinlage des erfindungsgemäßen Reifens auftreten können, können vermieden werden, wenn die Verstärkungsstruktur in Form eines nahtlosen Ringes eingesetzt wird. Nach dem Stand der Technik weisen die als Festigkeitsträger in Fahrzeugreifen enthaltenen Gewebelagen alle einen Stoß auf, der naturgemäß eine Schwachstelle des Aufbaus darstellt. Diesem bekannten Prinzip gegenüber bietet eine nahtlose, ringförmige Verstärkungsstruktur eine erheblich größere Sicherheit. Ein Netzwerkstoff in Form einer ringförmigen Verstärkungsstruktur ist daher ebenfalls Gegenstand dieser Erfindung. Die Abb. 3 zeigt einen Schnitt, in der Ringebene liegend, durch eine erfindungsgemäße nahtlose, ringförmige Verstärkungsstruktur. Mit einer Basisfläche (2) und hütchenförmigen Erhebungen (3). Die Fig. 4 zeigt einen Schnitt in der Ebene A-A senkrecht zur Ringebene durch die erfindungsgemäße nahtlose, ringförmige Verstärkungsstruktur. Die Fig. 5 zeigt einen Schnitt senkrecht zur Ringebene durch einen erfindungsgemäßen Fahrzeugreifen, dessen Kautschukmasse durch einen Netzwerkstoff skelettartig durchsetzt ist, wobei die Grundebene (2) des Netzwerkstoffs durch Cordlagen (6), die in Richtung der Gürtelfäden laufen, fixiert ist.

Ein weiterer Gegenstand der vorliegenden Erfindung ist ein Netzwerkstoff in flacher Form oder in Form eines nahtlosen kreisförmigen Gebildes, der auf seiner Oberfläche mit einer gummifreundlichen Ausrüstung versehen ist.

Als gummifreundliche Ausrüstungen des erfindungsgemäßen Netzwerkstoffs kommen alle für diesen Zweck bereits bekannten Mittel in Betracht, die die Haftung zwischen Festigkeitsträgern und Kautschukmaterial in Fahrzeugreifen, Transportbändern, Keilriemen und ähnlichen hochfesten Gummiartikeln verbessern.

Soweit die in den erfindungsgemäßen hochfesten Kautschukverbundmaterialien enthaltenen Netzwerkstoffe aus Spinnfasern insbesonder Naturfasern, wie z. B. Zellulosegarnen bestehen, eignen sich alle als Haftvermittler bekannten Systeme, insbesondere auch die altbekannten Resorzinformaldehydharze in Kombination mit Latices (RFL-dip). Soweit der Netzwerkstoff aus Synthesefasern aufgebaut ist, insbesondere aus Endlosfasergarnen, ist es zweckmäßig, modernere Typen der Haftvermittler einzusetzen, die sich insbesondere durch im Gehalt spezieller Latices wie z. B. eines Vinylpyridinlatex (VP-Latex) auszeichnen, welches ein Mischpolymerisat aus ca. 70 % Butadien, ca. 15 % Styrol und ca. 15 % 2-Vinylpyridin darstellt. Weitere in Haftvermittlern enthaltene Latices sind beispielsweise Acrylnitrilkautschuk- oder Styrolbutadienkautschuk-Latices. Diese können für sich allein oder in Kombination untereinander eingesetzt werden. Speziell für die Haftausrüstung von Polyester eignen sich auch Haftvermittler, die in Mehrstufenverfahren aufgebracht werden, wobei beispielsweise ein geblocktes Isocyanat in Kombination mit Polyepoxid aufgebracht wird und anschließend das Material noch mit einem üblichen RFL-dip versehen wird. Auch Kombinationen von RFL-dips mit weiteren haftvermittelnden Substanzen wie z. B. einem Reaktionsprodukt aus Triallylcyanurat, Resorcin und Formaldehyd oder p-Chlorphenol, Resorcin und Formaldehyd können als Haftvermittler auf den erfindungsgemäßen Netzwerkstoffen vorhanden sein.

Detailliertere Informationen über die Natur der auf den erfindungsgemäßen Netzwerkstoffen vorhandenen Haftvermittler finden sich beispielsweise in "Ullmann's Enzyklopädie der Technischen Chemie, 4. Auflage, Band 13, Seiten 662-664 sowie in der dort zitierten Primärliteratur.

Die feste Einbindung des Netzwerkstoffs in den erfindungsgemäßen Kautschukverbundwerkstoff erfolgt zweckmäßigerweise durch eine entsprechende Verbindung des Netzwerkstoffs mit den übrigen in dem Kautschukverbundwerkstoff enthaltenen Festigkeitsträgern. Bei einem erfindungsgemäßen Kautschukverbundwerkstoff in Form eines Fahrzeugreifens kann beispielsweise der Netzwerkstoff über den Verstärkungsfasern des Karkassen-und des Gürtelaufbaus liegen, wenn er durch geeignete Ankerelemente z. B. eine Vielzahl über die Struktur verteilte Metall- oder Kunststoffanker oder durch den gesamten Reifenaufbau durchdringende Verankerungsfäden mit Karkasse und Gürtel fest verbunden ist. Der Netzwerkstoff kann jedoch auch in den Karkassen- und Gürtelaufbau des Reifens in der Art integriert werden, daß ein gewisser Anteil der Fäden von Karkasse und Gürtel, vom Radmittelpunkt her gesehen, unterhalb und ein anderer Anteil oberhalb der Basis des Netzwerkstoffs verläuft, so daß dieser fest in den Gesamtaufbau eingebunden wird. Weiterhin besteht auch die Möglichkeit, schon bei der Herstellung des Netzwerkstoffs ein Ausgangsmaterial einzusetzen, in das durch spezielle Strick- oder Webverfahren ein Teil der Festigkeitsträger der Karkasse und/oder des Gürtels eingearbeitet sind. In diesem Fall ist es besonders vorteilhaft, wenn diese, die besondere Festigkeit des Reifens begründenden Fäden der Karkasse und/oder des Gürtels den Netzwerkstoff in den Zonen geringster Ausformungen senkrecht zur Laufflächenebene durchsetzen. Weist der Netzwerkstoff zwischen den senkrecht zur Lauffläche stehenden Ausformungen noch eine ebene Basis auf, was bevorzugt ist, so ist es zweckmäßig, wenn diese Basis von den Fäden des Karkassenaufbaus und/oder des Gürtels eingeschlossen ist oder von ihnen durchsetzt wird.

Die Herstellung der erfindungsgemäßen, hochbeanspruchbaren Kautschukverbundwerkstoffe erfolgt in an sich bekannter Weise indem die Festigkeitsträger in ihrer Kombination mit dem Netzwerkstoff, in der Regel nach dem Aufbringen des haftvermittelnden Überzugs mit der Kautschukmasse imprägniert und beschichtet werden. Unter Beschichten ist auch die Durchführung der beispielsweise in der Reifenindustrie üblichen Formgebungsmaßnahmen zu verstehen. Zur Herstellung eines Fahrzeugreifens wird beispielsweise der Netzwerkstoff zusammen mit den Cordlagen für Karkasse und Gürtel auf die Aufbautrommel aufgelegt, der Aufbau mit der Laufflächenmischung beschichtet und der üblichen Formgebung durch Bombage und Vulkanisation zugeführt. Alternativ kann der Netzwerkstoff auch in die vorbereitete Lauffläche integriert mit dieser aufgelegt werden. Wegen weiterer Verfahrensdetails dieser bekannten Reifenaufbaumaßnahmen verweisen wir auf E.A. Hauser, Handbuch der gesamten Kautschuktechnologie, Union Deutsche Verlagsgesellschaft, Berlin, 1935, J.F. Lehnen, Maschinenanlagen und Verfahrenstechnik in der Gummiindustrie, Berliner Union, Stuttgart, 1968, K. Mau, Die Praxis des Gummifachwerkers, Berliner Union, Stuttgart, 1951, W. Seyderhelm, J. Frey, Zusammenfassende Darstellung der Rohlingsvorbereitung in der Gummiindustrie, Kautschukgummikunststoffe, Bd. 28, Seite 335, 1975.

Eine Möglichkeit zur Herstellung des dreidimensional geformten Netzwerkstoffs besteht darin, daß zunächst ein flächenförmiges, tiefziehfähiges Textilmaterial, vorzugsweise eine Maschenware, mit einem zur mechanischen Stabilisierung der Verformungen geeigneten obengenannten Harz imprägniert wird. Die Applikation der Harze auf das Textilmaterial kann in üblicher Weise durch Aufstreichen, Bürsten, Rakeln, Pflatschen oder besonders vorteilhaft durch Tauchen erfolgen. Das mit Harz beaufschlagte Material wird anschließend zweckmäßigerweise durch ein Quetschwalzenpaar auf die gewünschte Harzaufnahme abgequetscht. Die Beharzung des tiefziehfähigen Textilmaterials kann alternativ auch dadurch erfolgen, daß man es zusammen mit einer Folie aus einem Resol (schmelzbares Vorkondensat eines Duroplasten) dem Tiefziehprozeß unterwirft. In der Schmelzphase durchdringt dabei das Harz das Textilmaterial und imprägniert es in der gewünschten Weise.

Thermoplastische Harze werden für den Imprägniervorgang zweckmäßigerweise in Form von Lösungen oder vorzugsweise von Emulsionen aufgebracht. Hitzehärtbare Harze (Duroplaste) zweckmäßigerweise in der handelsüblichen Form als hochkonzentrierte wäßrige Lösungen oder Dispersionen.

Nach einer eventuellen Zwischentrocknung des harzimprägnierten Textilmaterials wird es dem Tiefziehprozeß bei erhöhter Temperatur unterworfen. Die Temperatur des Tiefziehens wird so gewählt daß thermoplastische Harze aufgeschmolzen werden können und dabei die Fäden der Netzstruktur vollständig durchdringen.

Das Gleiche gilt für Duroplaste; hier wird die Temperatur der Tiefzieheinrichtung so eingestellt, daß der Fließbereich des Duroplasts erreicht wird. Nach dem Schmelzen des Harzes wird die Temperatur der Tiefzieheinrichtung so geregelt, daß das Imprägnierharz erhärten kann. Bei Einsatz von Thermoplasten ist hierzu die Temperatur unter den Schmelzpunkt der Thermoplasten zu reduzieren; bei Duroplasten kann die Temperatur des Tiefziehgerätes in der Regel unverändert bleiben, weil die Aushärtung der Duroplasten auch bei erhöhter Temperatur erfolgt. Die Tiefzieheinrichtung wird so lange geschlossen gehalten, bis das stabilisierende Harz vollständig erhärtet ist und die durch Tiefziehen erreichte Struktur des Fasermaterials stabil bleibt.

Nach der Herstellung des dreidimensional verformten Netzwerkstoffs erfolgt dessen oberflächliche Haftmittel-Ausrüstung.

Wie oben bereits ausgeführt kann der Beharzungs- und Zwischentrocknungsschritt bei der Herstellung des Netzwerkstoffs unterbleiben, wenn die natürliche Stabilität der Netzwerkstruktur, hergestellt aus einem Textilmaterial mit irreversibler Dehnbarkeit, ihre Einlagerung in die Kautschukmasse gestattet.

Soll der Netzwerkstoff in seiner bevorzugten Ausführungsform eines nahtlosen Kreisringkörpers eingesetzt werden, so geht man zu dessen Herstellung von einem Abschnitt einer schlauchförmigen Maschenware, z.B. eines Strickschlauchs aus. Dieser wird, in analoger Weise wie ein flächenförmiges Textilmaterial auf einer geeigneten Tiefziehvorrichtung, die z.B. eine trommelförmige Matritze, auf die der Schlauchabschnitt aufgezogen wird, und auf beweglichen Trommel-Segmenten angeordnete Ziehstempel aufweist, die von innen oder von außen in die Löcher der Matritze eingefahren werden können, in die gewünschte Form gebracht. Auch bei dieser Ausführungsform kann der Strickschlauch oder dessen Abschnitt vor dem Tiefziehen mit einer Harzimprägnierung, wie oben beschrieben, versehen werden.

Der Netzwerkstoff als dreidimensionale Verstärkung der Kautschukmasse kann, wie oben beschrieben, in verschiedenster Form in den Kautschuk-Verbundstoff, insbesondere den Reifenaufbau eingebettet sein. In der bevorzugten Ausführungsform eines Gürtelreifens ist der Netzwerkstoff zwischen Stahl- oder Textilgürtel und Lauffläche angeordnet, wobei seine, beispielsweise kegelförmigen, Ausformungen bis in die Profilierung der Lauffläche hineinragen können. Der Netzwerkstoff kann dabei in seiner Geometrie der Gestalt der Lauffläche und ggf. der Profilierung angepaßt werden.

Die bevorzugte erfindungsgemäße Verstärkung, bei der eine Endlos- (Nahtlos-)Faserstruktur die Kautschukmasse skelettartig durchsetzt, führt zu erheblichen Verbesserungen hinsichtlich der Zug- und Weiterreißfestigkeit und der Modulwerte des Kautschuk- Verbundstoffs und vermindert bei Fahrzeugreifen drastisch die Gefahr der Laufflächenablösung. Eine Armierung und Stabilisierung bis in die Profilierung des Reifens hinein ist insbesondere für Reifen mit großer Profilhöhe, wie z.B. für Flugzeugreifen, von größter Bedeutung. Insbesondere auch bei runderneuerten Reifen hat diese Maßnahme zur Vermeidung von Delaminationen der Lauffläche besonderes Gewicht. Die erfindungsgemäße Einlagerung des Netzwerkstoffs führt hier zu einer erheblich höheren Grenzflächenhaftung und Kautschukstabilisierung und vermindert so die flächige Ablösung von Reifenteilen.

Wie bereits oben ausgeführt, ist bei einer weiteren bevorzugten Ausführungform der vorliegenden Erfindung die Verstärkungsstruktur aus dem Netzwerkstoff so angeordnet, daß sie auch gleichzeitig die radial angeordneten Fäden der Karkasse und die umlaufenden Fäden des Gürtels aufnimmt. Die Fäden dieser Festigkeitsträger kreuzen sich dabei vorzugsweise auf der beispielsweise eine Vielzahl von noppenförmigen Erhebungen aufweisenden Grundebene des Netzwerkstoffs, wobei die einzelnen Fadenlagen vor dem Einbau auch noch fest miteinander verbunden sein können. Bei einer derartigen Konstruktion des erfindungsgemäßen Reifens sind die verschiedenen Festigkeitsträger nicht mehr in Form getrennter Gewebelagen in verschiedenen Schichten angeordnet, so daß diese sich auch nicht mehr voneinander trennen können. Darüberhinaus kann auf diese Weise auch das Querschnittsprofil des Reifens vorteilhaft gestaltet werden, und zwar indem die einzelnen Fadenlagen des Gürtels über den Querschnitt einen unterschiedlichen Umfang aufweisen können.

Als Material für den Gürtel werden bevorzugt hochfeste Fäden aus Aramid (vollaromatischen Polyamiden) oder Stahldrähte eingesetzt; für die Karkasse finden bevorzugt hochfeste Fäden aus Polyestern Anwendung.

## Patentansprüche

1. Hochbeanspruchbarer Kautschuk-Verbundwerkstoff mit einer Verstärkungsstruktur, dadurch gekennzeichnet, daß die Verstärkungsstruktur aus einem Netzwerkstoff aus einem dreidimensional geformten, ein maschenoffenes Raumnetzwerk bildenden Textilmaterial besteht, welcher die Kautschukmasse räumlich skelettartig durchsetzt.

2. Verbundwerkstoff gemäß Anspruch 1, dadurch gekennzeichnet, daß die maschenoffene Struktur des Netzwerkstoffs der Struktur eines tiefgezogenen, tiefziehfähigen Textilmaterials aus einem Gestrick oder aus dehnbaren Filamenten entspricht.

3. Verbundwerkstoff gemäß mindestens einem der Ansprüche 1 und 2, dadurch gekennzeichnet, daß der Netzwerkstoff ein strukturstabilisierendes Harz enthält.

4. Verbundwerkstoff gemäß mindestens einem der Ansprüche 1 bis 3, dadurch gekennzeichnet, daß der Verbundwerkstoff außer dem Netzwerkstoff weitere Fasermaterialien als Festigkeitsträger aufweist.

5. Verbundwerkstoff gemäß mindestens einem der Ansprüche 1 bis 4, dadurch gekennzeichnet, daß er die Form eines Fahrzeugreifens hat.

6. Fahrzeugreifen gemäß Anspruch 5 aus einem Verbundwerkstoff der Ansprüche 1 bis 4, dadurch gekennzeichnet, daß der Netzwerkstoff eine nahtlose Verstärkungsstruktur bildet.

7. Fahrzeugreifen gemäß mindestens einem der Ansprüche 5 und 6, dadurch gekennzeichnet, daß der Netzwerkstoff über den Verstärkungsfasern des Karkassen- und des Gürtelaufbaus liegt und durch Ankerelemente in dem Karkassen- und Gürtelaufbau verankert ist.

8. Fahrzeugreifen gemäß mindestens einem der Ansprüche 5 bis 7, dadurch gekennzeichnet, daß die Fäden der Karkasse und/oder des Textilgürtels den Netzwerkstoff in den Zonen geringster Ausformung senkrecht zur Laufflächenebene durchsetzen.

9. Fahrzeugreifen gemäß mindestens einem der Ansprüche 1 bis 8, dadurch gekennzeichnet, daß die Basis des Netzwerkstoffs von den Fäden des Karkassenaufbaus und/oder des Gürtels eingeschlossen ist oder von ihnen durchsetzt wird.

10. Netzwerkstoff aus einem dreidimensional geformten, ein maschenoffenes Raumnetzwerk bildenden Textilmaterial, dadurch gekennzeichnet, daß das Material oberflächlich mit einem Haftvermittler überzogen ist.

11. Netzwerkstoff gemäß Anspruch 10, dadurch gekennzeichnet, daß der Haftvermittlerüberzug ein Vorkondensat eines Phenolderivats mit Formaldehyd enthält.

12. Netzwerkstoff gemäß mindestens einem der Ansprüche 10 und 11, dadurch gekennzeichnet, daß der Haftvermittler ein Vinylpyridinlatex enthält.

13. Netzwerkstoff gemäß mindestens einem der Ansprüche 10 und 11, dadurch gekennzeichnet, daß der Haftvermittler ein geblocktes Isocyanat in Kombination mit einem Polyepoxid enthält.

14. Netzwerkstoff aus einem dreidimensional geformten, ein maschenoffenes Raumnetzwerk bildenden Textilmaterial, dadurch gekennzeichnet, daß er die Form eines nahtlosen Kreisringkörpers aufweist.

15. Verfahren zur Herstellung eines Netzwerkstoffs aus einem dreidimensional geformten, ein maschenoffenes Netzwerk bildenden Textilmaterial durch Tiefziehen eines tiefziehfähigen Textilmaterials, dadurch gekennzeichnet, daß der tiefgezogene dreidimensional gezogene Netzwerkstoff mit einem Haftvermittler imprägniert und überzogen wird.

16. Verfahren zur Herstellung eines Netzwerkstoffs aus einem dreidimensional geformten ein maschenoffenes Raumnetzwerk bildenden Textilmaterial in Form eines nahtlosen Kreisringkörpers, dadurch gekennzeichnet, daß ein Abschnitt eines Schlauchs aus einer Maschenware auf einer geeigneten Tiefziehvorrichtung tiefgezogen wird.

17. Verfahren gemäß Anspruch 16, dadurch gekennzeichnet, daß der Netzwerkstoff in Form eines Kreisringkörpers mit einem Haftvermittler überzogen wird.

18. Verfahren gemäß mindestens einem der Ansprüche 15 und 16, dadurch gekennzeichnet, daß ein beharztes Textilmaterial tiefgezogen wird.

## Claims

1. A heavy duty rubber composite having a reinforcement structure, wherein the reinforcement structure is composed of a network material made from a three-dimensionally shaped textile material forming an open-mesh three-dimensional network which penetrates the rubber material three-dimensionally in a skeleton-like manner.

2. The composite as claimed in claim 1, wherein the open-mesh structure of the network material corresponds to the structure of a deep-drawn, deep-drawable textile material made from a knitted fabric or from extensible filaments.

3. The composite as claimed in at least one of claims 1 and 2, wherein the network material contains a structure-stabilizing resin.

4. The composite as claimed in at least one of claims 1 to 3, wherein the composite contains, besides the network material, other fibrous materials as reinforcements.

5. The composite as claimed in at least one of claims 1 to 4, wherein it is in the form of a vehicle tire.

6. A vehicle tire as claimed in claim 5 made from the composite of claims 1 to 4, wherein the network material forms a seamless reinforcement structure.

7. The vehicle tire as claimed in at least one of claims 5 and 6, wherein the network material is located on top of the reinforcement fibers of the carcass structure and of the belt structure and is anchored by means of anchoring elements in the carcass structure and belt structure.

8. The vehicle tire as claimed in at least one of claims 1 to 7, wherein the filaments of the carcass and/or of the textile belt penetrate the network material in the zones of least re-shaping, perpendicular to the plane of the tread.

9. The vehicle tire as claimed in at least one of claims 1 to 8, wherein the base of the network material is encircled or penetrated by the filaments of the carcass structure and/or of the belt.

10. A network material made from a three-dimensionally shaped textile material forming an open-mesh three-dimensional network, wherein the material has been surface-coated with an adhesion promoter.

11. The network material as claimed in claim 10, wherein the adhesion promoter coating contains a precondensate of a phenol derivative with formaldehyde.

12. The network material as claimed in at least one of claims 10 and 11, wherein the adhesion promoter contains a vinylpyridine latex.

13. The network material as claimed in at least one of claims 10 and 11, wherein the adhesion promoter contains a blocked isocyanate in combination with a polyepoxide.

14. A network material made from a three-dimensionally shaped textile material forming an open-mesh three-dimensional network, wherein the network material is in the form of a seamless annular article.

15. A process for the preparation of a network material made from a three-dimensionally shaped textile material forming an open-mesh network by deep-drawing a deep-drawable textile material, which comprises impregnating and coating the deep-drawn three-dimensionally shaped network material with an adhesion promoter.

16. A process for the preparation of a network material made from a three-dimensionally shaped textile material forming an open-mesh three-dimensional network in the form of a seamless annular article, wherein a section of a tube of a knitted fabric is deep-drawn on a suitable deep-drawing apparatus.

17. The process as claimed in claim 16, wherein the network material in the form of an annular article is coated with an adhesion promoter.

18. The process as claimed in at least one of claims 15 and 16, wherein a resin-treated textile material is deep-drawn.

## Revendications

1. Matériau composite de caoutchouc à haute charge admissible avec une structure de renfort, caractérisé en ce que la structure de renfort est constituée d'un matériau de réseau d'une matière textile formée en trois dimensions formant un réseau spatial à mailles ouvertes, lequel réseau pénètre dans l'espace comme un squelette la masse de caoutchouc.

2. Matériau composite selon la revendication 1, caractérisé en ce que la structure à mailles ouvertes du matériau de réseau correspond à la structure d'une matière textile emboutissable emboutie d'un tricot ou filaments extensibles.

3. Matériau composite selon au moins l'une des revendications 1 ou 2, caractérisé en ce que le matériau de réseau contient une résine de stabilisation de la structure.

4. Matériau composite selon au moins l'une des revendications 1 à 3, caractérisé en ce que le matériau composite présente, outre le matériau de réseau, d'autres matières fibreuses en tant que supports de résistance.

5. Matériau composite selon au moins l'une des revendications 1 à 4, caractérisé en ce qu'il a la forme d'un pneumatique de véhicule.

6. Matériau composite selon la revendication 5 en un matériau composite des revendications 1 à 4, caractérisé en ce que la matériau de réseau forme une structure de renfort sans couture.

7. Pneumatique de véhicule selon au moins l'une des revendications 5 et 6, caractérisé en ce que le matériau de réseau repose sur les fibres de renfort de l'assemblage de la carcasse et de la ceinture et est ancré à l'aide d'éléments d'ancrage dans l'assemblage de la carcasse et de la ceinture.

8. Pneumatique de véhicule selon au moins l'une des revendications 5 à 7, caractérisé en ce que les filés de la carcasse et/ou de la ceinture textile pénètrent le matériau de réseau dans les zones de déformation minimum perpendiculairement au plan de la bande de roulement.

9. Pneumatique de véhicule selon au moins l'une des revendications 1 à 8, caractérisé en ce que la base du matériau de réseau est pénétrée ou enfermée par les filés de l'assemblage de la carcasse et/ou de la ceinture.

10. Matériau de réseau en matière textile formée en trois dimensions formant un réseau spatial à mailles ouvertes, caractérisé en ce que la matière est revêtue à la surface d'un agent d'adhérisation.

11. Matériau de réseau selon la revendication 10, caractérisé en ce que le revêtement en agent d'adhérisation contient un précondensat d'un dérivé de phénol avec le formaldéhyde.

12. Matériau de réseau selon au moins l'une des revendications 10 et 11, caractérisé en ce que l'agent d'adhérisation contient un latex de vinylpyridine.

13. Matériau de réseau selon au moins l'une des revendications 10 et 11, caractérisé en ce que l'agent d'adhérisation contient un isocyanate bloqué en combinaison avec un polyépoxyde.

14. Matériau de réseau en une matière textile formée en trois dimensions, formant un réseau spatial à mailles ouvertes, caractérisé en ce qu'il présente la forme d'un anneau circulaire sans couture.

15. Procédé pour la préparation d'un matériau de réseau en matière textile formée en trois dimensions, formant un réseau à mailles ouvertes par emboutissage d'une matière textile emboutissable, caractérisé en ce que le matériau de réseau embouti, étiré en trois dimensions est imprégné et revêtu d'un agent d'adhérisation.

16. Procédé pour la préparation d'un matériau de réseau en matière textile formée en trois dimensions, formant un réseau spatial à mailles ouvertes, sous forme d'un anneau circulaire sans couture, caractérisé en ce qu'on emboutit un morceau d'un boyau d'un produit tricoté sur une installation d'emboutissage appropriée.

17. Procédé selon la revendication 16, caractérisé en ce que le matériau de réseau sous forme d'un anneau circulaire est enduit d'un agent d'adhérisation.

18. Procédé selon au l'une des revendications 15 et 16, caractérisé en ce qu'on emboutit une matière textile imprégnée de résine.
